# EUROPEAN PATENT SPECIFICATION

(11) **EP 3 237 184 B1**
(45) Date of publication and mention of the grant of the patent: **20.03.2024**
(21) Application number: 15813881.8
(22) Date of filing: 22.12.2015
(51) Int. Cl.: B29C 70/86, B29C 63/26, F16L 9/12, F17C 1/06, B32B 1/08, B29C 70/30, B32B 5/02, B32B 5/08, B32B 5/26, B32B 7/12, B29C 63/30, B32B 1/02, F16L 9/128, F17C 1/16, F17C 3/02, B32B 3/04, B32B 27/12

(54) **PROCESS FOR MANUFACTURING A FLUID TIGHT LAMINATE OF COMPOSITE MATERIAL ON A TANK, VESSEL OR TUBE FOR STORAGE, TRANSPORT OR TRANSFER OF A CRYOGENIC FLUID**
VERFAHREN ZUR HERSTELLUNG EINES FLÜSSIGKEITSDICHTEN LAMINATS AUS VERBUNDWERKSTOFF AUF EINEM TANK, GEFÄSS ODER ROHR FÜR DIE LAGERUNG, DEN TRANSPORT ODER DEN TRANSFER EINES KRYOGENEN FLUIDS
PROCÉDÉ DE FABRICATION D'UN LAMINÉ ÉTANCHE EN MATÉRIAU COMPOSITE SUR UN RÉSERVOIR, UNE CUVE OU UN TUBE POUR LE STOCKAGE, LE TRANSPORT OU LE TRANSFERT D'UN FLUIDE CRYOGÉNIQUE

(30) Priority: 24.12.2014 EP 14200346
(43) Date of publication of application: 01.11.2017
(73) Proprietor: Shell Internationale Research Maatschappij B.V., 2596 HR The Hague (NL)
(72) Inventor: HONSELAAR, Cornelis, Henricus, 2381 KG Zoeterwoude (NL); JANSSEN, Franciscus, Antonius, Henri, 1031 HW Amsterdam (NL)
(74) Representative: Shell Legal Services IP
(86) International application number: PCT/EP2015/081086
(87) International publication number: WO 2016/102624

(56) References cited:
- EP-A1- 1 818 596
- WO-A1-2008/068303
- WO-A1-2013/179442
- US-A- 5 879 498

## Description

### Technical Field

The present invention relates to process for manufacturing a liquid tight laminate of composite material on an object; an object obtainable with the process, in particular a tank, vessel or tube; and the use of the tank, vessel, or tube for storage, transport or transfer of a cryogenic fluid.

### Background

Fluid barriers for use under cryogenic conditions such as storage tanks and pipelines are intended to prevent the egress of the cryogenic fluid towards materials behind the barrier. Typically, conventional fluid barriers are based on special materials having similar properties such as nickel-steel or special fibre-reinforced composite materials. Examples of such special fibre-reinforced composite materials include those composed of thermosetting plastic matrix materials (such as epoxy and polyurethanes) reinforced by structural fibres such as graphite, glass, such as S2 glass and E glass, and Ultra High Molecular Weight polyethylene. As an example, WO 2006/003192 A1 describes the use of a fluid barrier in a thermally insulated container for storing liquefied gas such as LNG (liquefied natural gas), liquefied nitrogen, oxygen or carbon dioxide and liquefied hydrogen. The fluid barrier as disclosed in WO 2006/003192 comprises a plastic material such as polyurethane or epoxy or a combination thereof.

Tanks for storage of cryogenic liquids typically contain a fluid barrier that is made of sheets of stainless steel materials that are welded together. The application of stainless steel materials has the advantage that these materials show little shrinkage when cooled down at cryogenic temperatures. However, the stiffness of these materials leaves much room for improvement to ensure that the wall construction of the tank is not damaged as a result of for instances thermal induced stresses or sloshing during transport in tanks that are arranged inside ships such as LNG ship tanks. In addition, the building of these tanks is very expensive because the stainless steel materials used and it is most time-consuming to build such fluid barriers. The building of a large on-shore LNG tank may for instance well take up to several years to be completed.

EP1818596 A1 discloses an hydraulic or pneumatic pressure reservoir for commercial vehicles, trains or firefighting systems assembled from components made of fiber-reinforced polyethylene, polypropylene or polyamide.

It is an object to provide a process manufacturing a fluid barrier which deals with the above disadvantages.

### Summary

A process is provided in which layers of sheets of a particular composite material are arranged and adhered together in a special manner.

Accordingly, there is provided a process for manufacturing a fluid tight laminate of composite material on tank, vessel, or tube for storage, transport or transfer of a cryogenic fluid in accordance with claim 1.

In accordance a process for manufacturing fluid tight laminate is provided which is much faster to make and for less costs when compared with known processes. In addition, the laminates so obtained display excellent stress properties under cryogenic conditions.

In the context of the present disclosure the term "fluid tight" means that the laminate will be impermeable to fluids to a very high extent. However, the skilled person will appreciate that fluids will always permeate through thermoplastic materials to some, though a very limited extent.

### Detailed description

A process according to claim 1 is provided.

Preferably, the tapes or sheets of composite material as used in step (a) and the tapes or sheets of composite material as used in step (b) have the same width and thickness.

Preferably, the overlap as formed in step (b) on each side of the edge interface between each two adjacent sheets of composite material in the first layer as formed in step (a) has a width of at least four times the thickness of the tape or sheet as used in step (a).

Preferably, the edge interface between each two adjacent tapes or sheets of composite material has the same width.

The edge interface can have the form of a gap between two adjacent windings of tape or sheet. In that case the gap may have a width in the range of from 0.1-5 mm.

The edge interface may also be formed by the contact point between two adjacent windings of tape or sheet. In the latter case there will be no gap but a line, and the width of the line is close to zero.

Suitably, steps (a) and (b) are repeated after step (b) in the same sequence to form another liquid tight laminate on the wall of the object.

Preferably, the tapes or sheets of composite material as used in step (a) and the tapes or sheets of composite material as used in step (b) have a width in the range of from 5-100 mm and a thickness in the range of 0.1-2 mm.

Preferably, the composite material of which the tapes or sheets are made as used in steps (a) and (b) have a woven structure.

Preferably, the tape or sheet of composite material as used in step (a) and the tape or sheet of composite material as used in step (b) have the same width and thickness. Preferably, the thickness of the tape or sheet as used in steps (a) and (b) is in the range of from 0.1-2 mm, more preferably in the range of from 0.5-2 mm.

Preferably, the overlap as formed in step (b) on each side of the edge interface between each two adjacent windings of tape or sheet in the tape layer as formed in step (a) has a width of at least four times the thickness of the tape or sheet as used in step (a).

The composite material to be used has suitably a tensile Young's modulus of less than 50 Gpa at ambient conditions; and a tensile strain at break of at least 50 at ambient conditions. Preferably, the tensile Young's modulus is determined according to DIN EN ISO 527 at ambient conditions, that is standard atmospheric conditions according to ISO 554, in particular the recommended atmospheric conditions i.e. at 23 °C, 50% relative humidity and at a pressure between 86 and 106 kPa.

These properties are determined in accordance with DIN EN ISO 527, which instructs that the test specimen is extended along its major longitudinal axis at a constant speed until the specimen fractures or until the stress (load) or the strain (elongation) reaches some predetermined value. During this procedure, the load sustained by the specimen and the elongation are measured. Thus, it is within the standard that both the modulus and the strain are determined in a single direction. This doesn't exclude the possibility that the material comprises other directions wherein the Young's modulus and/or the tensile strain at break can be different. As long as there is a direction in which the tensile Young's modulus of less than 50 Gpa at ambient conditions and a tensile strain at break of at least 50 at ambient conditions present, the material falls under the above specified properties.

In case the material is a fibre-reinforced material, DIN EN ISO 527 suggests certain directions.

In case the material is an isotropic fibre-reinforced plastic composite the direction in which measurements according to DIN EN ISO 527 are performed is irrelevant, as the material is isotropic and will thus exhibit the same properties in all directions.

In case the material is an orthotropic fibre-reinforced plastic composite, DIN EN ISO 527 defines that measurements are to be done in two directions: the "1"-direction is normally defined in terms of a feature associated with the material structure or the production process, such as the length direction in continuous-sheet processes. The "2"-direction is perpendicular to the "1"-direction. In this case, the feature associated with the material structure will trigger the skilled person to choose the 1-direction to coincide with one direction of the fibres and the 2-direction perpendicular to the 1-direction.

In case the material is an: unidirectional fibre-reinforced plastic composites, the DIN EN ISO 527 defines that measurements are to be done in two directions, i.e. direction 1 and 2: the direction parallel to the fibres is defined as the "1"-direction and the direction perpendicular to them (in the plane of the fibres) as the "2"-direction.

However, according to the present disclosure, as long as the above mentioned parameters are found in one direction within the material, the material falls within the mentioned parameters. So, a material having at least one direction with the above parameters fits the concept underlying the present disclosure. By proposing a composite material having a low stiffness and a high elongation at break, this material is allowed to deform such as to prevent the generation of high stress whereby the very strong fibres (such as carbon) can be avoided.

Preferably, the tensile strain at break at ambient conditions is above 8%, more preferably above 10%, and even more preferably above 15%. Typically, the tensile strain at break at ambient conditions is not more than 75%.

The tensile strain at break is determined according to DIN EN ISO 527 at ambient conditions.

The stress of a material is related to its tensile Young's modulus and its coefficient of thermal expansion, and for cryogenic materials, it has hitherto been considered that low stress materials could not be used with cryogenic fluids due to the significant changes in temperatures experienced in use. However, it has been found that the use of a composite material having a relatively low tensile Young's modulus is useable with cryogenic fluids. The use of such composite materials reduces the thermally induced stresses on the fluid barrier material as well as on any supporting structure, thereby enabling a wider range of materials to be selected for this supporting structure.

According to the present disclosure, a "composite material" is an engineered material made from two or more constituent materials with different physical or chemical properties and which remain separate and distinct on a macroscopic level within the finished structure. The tensile Young's modulus value of the composite material may depend on the relative amounts of the materials used. The person skilled in the art will readily understand how to vary the volume fractions of the various components of the composite material to tailor the desired properties.

In one embodiment, the composite material is a mono-material composite, i.e. a composite material formed from two layers comprising the same material, for example two layers of oriented thermoplastic material that are fused together at elevated temperature and pressure, thus forming thermoplastic matrix material interdispersed between and in the layers of oriented thermoplastic material. As is known by those skilled in the art, elevated pressure, in particular hydrostatic pressure, is important to control the melting temperature of the oriented thermoplastic material. Furthermore, in the mono-material composite material one or more additives may also be incorporated being chemically different. The composite material is a thermoplastic matrix material reinforced by a reinforcer, preferably where the reinforcer is at least partially incorporated into the thermoplastic matrix material. The thermoplastic matrix material may thus function as a continuous solid phase in which the reinforcer is embedded. There are no specific limitations with respect to the ratio of thermoplastic matrix material and reinforcer. The reinforcer may be in the form of chopped or continuous fibres, flakes or particles, but is preferably transformed into a material having a textile-like structure, such as felt, woven, roving, fabric, knit or stitched structure. Further it is preferred that the reinforcer is selected from the group consisting of natural and thermoplastic materials or a combination thereof. The natural material may comprise fibres including vegetable fibres such as coir, cotton, linen, jute, flax, ramie, sisal and hemp; and animal fibres such as sheep wool, horse hair, and silk.

Preferably the reinforcer comprises a thermoplastic material. Preferably the thermoplastic material for the reinforcer comprises a polyolefin selected from the group consisting of polyethylene, polypropylene, polybutylene, polymethylpentene, polyisobutene or a copolymer or terpolymer thereof, preferably polypropylene.

The reinforcer can also be selected from a broad range of materials including carbon fibres, glass fibres, and polymeric fibres as long as the resulting composite material has a tensile Young's modulus of less than 50 Gpa and a tensile strain at break of at least 5%.

Preferably, the reinforcer has a tensile strain at break of at least 5% as determined according to DIN EN ISO 527 at ambient conditions, more preferably the tensile strain at break at ambient conditions is above 8%, even more preferably above 10%, and most preferably above 15%. Typically, the tensile strain at break at ambient conditions is not more than 75%.

The thermoplastic matrix material to be used can be selected from a broad range of materials such as polymer materials including polyester, polycarbonate, vinyl ester, epoxy, phenolic, polyimide, polyamide and others, as long as the resulting composite material has a tensile Young's modulus of less than 50 GPa. However, it is preferred that the plastic matrix material has a tensile Young's modulus of 0.1-5.0 GPa as determined according to DIN EN ISO 527 at ambient conditions.

An advantage of the thermoplastic material to be used is that it can be easily shaped. Preferably, the thermoplastic material comprises a polyolefin selected from the group consisting of polyethylene, polypropylene, polybutylene, polymethylpentene, polyisobutene or a copolymer or terpolymer thereof, such as EPDM, preferably polypropylene.

The thermoplastic matrix material is preferably a thermoplastic material, in which both an oriented thermoplastic material, such as a reinforcing fibrous phase, and a matrix between the oriented thermoplastic material, comprises, preferably consists essentially of, more preferably consists of, the same thermoplastic polymer. Bonding is achieved due to controlled surface melting of the oriented thermoplastic material. The physical properties of the thermoplastic matrix material, such as tensile Young's modulus and coefficient of thermal expansion (CTE), can be controlled by the extent of melting affected in the process, which determines the oriented/not oriented thermoplastic material volumetric ratio, also referred to as the fibre/matrix ratio. The way to manufacture these mono-material composites is known in the art and has for example been disclosed in US patent application publication No. 2005/0064163; B. Alcock et al. (2007), Journal of Applied Polymer Science, Vol. 104, 118-129; and B. Alcock et al . (2007), Composites: Part A (applied science and manufacturing), Vol. 38, 147-161.

The manufacturing process typically utilizes oriented thermoplastic polymer fibres in various forms: unidirectional lay-up, woven fabric or chopped fibres/non-woven felt. As is known in the art, it is important to control the fibres' melting temperature by hydrostatic pressure. The fibres are heated under elevated pressure to a temperature that is below their melting point at the elevated pressure but above the melting temperature at a lower pressure. Reduction of pressure for controlled time results in melting of the fibres, which starts at the fibre surface. This surface melting under controlled pressure followed by crystallization produces the consolidated structure. An alternative known process involves the use of a special co extrusion of matrix material around oriented thermoplastic material strands, such as fibres. This process of co-extrusion and tape welding has advantages over the conventional sealing processes because of the large sealing window (130-180 °C) without loss of material properties.

Preferably, the thermoplastic material comprises, more preferably consists essentially of, even more preferably consists of, a polyolefin selected from the group consisting of polyethylene, polypropylene, polybutylene, polymethylpentene, polyisobutene or a copolymer or terpolymer thereof, such as EPDM, more preferably polypropylene.

The composite material is to be used as a fluid barrier under cryogenic conditions, which means below -30 °C, more preferably at temperatures below -100 °C, or even below -150 °C. Such a temperature (below -100 °C, preferably below -150 °C, typically, -160 °C) is suitable for liquefied natural gas (LNG).

Preferably, the composite material has a tensile strain at break of at least 3% as determined according to DIN EN ISO 527 at -196 °C (in liquid nitrogen), more preferably at least 5%, even more preferably at least 6%, even more preferably above 8%, even more preferably above 10%. The composite material preferably has a coefficient of thermal expansion less than 250 * 10⁻⁶ m/m/°C at 40 °C. More preferably, the composite material is oriented and the composite material has a coefficient of thermal expansion less than 250 * 10⁻⁶ m/m/°C at 40 °C in the direction of the orientation of the composite material.

Further, preferably, the composite material has a coefficient of thermal expansion less than 100 * 10⁻⁶ m/m/°C at -60 °C. More preferably, the composite material is oriented and the composite material has a coefficient of thermal expansion less than 100 * 10⁻⁶ m/m/°C at -60 °C in the direction of the orientation of the composite material.

The coefficient of thermal expansion can suitably be determined according to ISO11359-2 in the temperature range between -60 and +70 °C by thermal mechanical analysis (TMA).

According to the claimed invention, both the upper surface of the first layer of adjacent sheets as formed in step (a) and the bottom surface of the sheets to be used in step (b) are heated by a laser beam at or near the location where the sheets as used in step (b) is adhered to the first layer of sheets formed in step (a).

Preferably, the composite material as used in step (a) is the same as the composite material as used in step (b) .

In a particularly attractive embodiment, the sheets of composite material as used in step (a) and the sheets of composite material as used in step (b) comprise a non-coloured core and two coloured outer layers. This embodiment has the advantage that less heat is required to adhere the sheets on each other, as a result of which the original properties of the composite material are better retained.

Preferably, the two coloured outer layers have a thickness in the range of from 0.015-0.1 mm, more preferably in the range of from 0.035-0.075 mm.

Preferably, the laser beam emits electromagnetic radiation at a wavelength of between 360 and 480 nanometres.

Suitably, in the process use is made of an apparatus for providing the sheets to be used in steps (a) and (b). Suitably, use will be made of an apparatus for providing the tape or sheet that comprises a tape or sheet placement device, a pressure device and a laser beam device. Suitably, the sheet, preferably in the form of a tape, is provided by means of a sheet (tape) placement device which is provided with a pressure devices and a laser beam device to ensures that sheet (tape) applies and adheres to the outer surface of the mandrel or tube part or each tape or sheet layer formed under radial pressing force.

The apparatus for providing the sheet (tape) comprise two or more sheet (tape) placement devices which each may be provided with a pressure device and a laser beam device. In this way, two or more sheets (tapes) can at the same time be adhered to the wall or earlier layer pf sheets in parallel.

A major advantage of the present process is that the layer of sheets will only be heated where the sheets are to be adhered to the first layer of sheets or any subsequent layer of sheets.

The apparatus for providing the sheets will be moved along the surface of the wall of the object. Preferably, vertically or horizontally.

According to the claimed invention, the wall of the object is the inside wall of a tank, vessel or tube.

Further provided is tank, vessel or tube obtainable with a process according to the above.

Further provided is the use of such a tank, vessel or tube for storage, transport or transfer of a cryogenic fluid.

Suitable tanks include tanks (i.e. bulk storage) at export and import terminals, shipping, and transfer elements such as pipes and hoses; onshore and offshore tanks of any geometric shape including (vertical) cylindrical tanks, prismatic tanks, ellipsoidal tanks, and spherical tanks; portable tanks and cargo tanks; pressurized or non-pressurized vessels for the temporary or permanent storage of cryogenic fluids; pressurized or non-pressurized vessels for the transport (on land, by sea or air by any means) of cryogenic fluids of any geometric shape including but not limited to (vertical) cylindrical, prismatic, ellipsoidal, spherical shapes); flexible or rigid tubes including onshore and offshore, above water, in water or underwater, including pipes, pipe sections, pipelines, piping systems, hoses, risers and associated equipment and detailing.

## Claims

1. Process for manufacturing a fluid tight laminate of composite material on a tank, vessel or tube for storage, transport or transfer of a cryogenic fluid, the process comprises the steps of:
(a) adhering tapes or sheets of a composite material to an inside wall of the tank, vessel or tube to form a first layer of adjacent tapes or sheets on the inside wall of the tank, vessel or tube;
(b) adhering to the first layer of adjacent tapes or sheets as formed in step (a) tapes or sheets of a composite material to form a second layer of tapes or sheets on the inside wall of the tank, vessel or tube, whereby the tapes or sheets of the second layer are arranged so as to overlap the edge interface between any two adjacent tapes or sheets of the first layer of tapes or sheets formed in step (a); and
wherein the composite material comprises a matrix of a thermoplastic material and an oriented thermoplastic material which is incorporated into the matrix of the thermoplastic material,
wherein the adhering of the tapes or sheets in step (b) is done under the application of a laser beam to heat and adhere the tapes or sheets as used in step (b) to the first layer of tapes or sheets as formed in step (a),
wherein both the upper surface of the tapes or sheets which form the first layer in step (a) and the bottom surface of the sheets as used in step (b) are heated by the laser beam at or near the location where the tapes or sheets as used in step (b) are adhered to the first layer formed in step (a),
wherein the width of the overlap on each side of the edge interface between each two adjacent tapes or sheets of composite material in the first layer is of the same size.

2. Process according to claim 1, wherein the tapes or sheets of composite material as used in step (a) and the tapes or sheets of composite material as used in step (b) have the same width and thickness.

3. Process according to any one of claims 1-2, wherein the overlap as formed in step (b) on each side of the edge interface between each two adjacent tapes or sheets of composite material in the first layer as formed in step (a) has a width of at least four times the thickness of the tape or sheet as used in step (a).

4. Process according to any one of claims 1-3, wherein the edge interface between each two adjacent tapes or sheets of composite material has the same width.

5. Process according to any one of claims 1-4, wherein steps (a) and (b) are repeated after step (b) in the same sequence to form another liquid tight laminate on the inside wall of the tank, vessel or tube.

6. Process according to any one of claims 1-5, wherein the tapes or sheets of composite material as used in step (a) and the tapes or sheets of composite material as used in step (b) have a width in the range of from 5-100 mm and a thickness in the range of 0.1-2 mm.

7. Process according to any one of claims 1-6, wherein the composite material of which the tapes or sheets are made as used in steps (a) and (b) have a woven structure.

8. Process according to any one of claims 1-7, wherein the thermoplastic material comprises an polyolefin selected from the group consisting of polyethylene, polypropylene, polybutylene, polymethylpentene, polyisobutene or a copolymer or terpolymer thereof, and polyester.

9. Process according to any one of claims 1-8, wherein the matrix of a thermoplastic material and the oriented thermoplastic material which is incorporated into the matrix of the thermoplastic material are made of the same thermoplastic material.

10. Process according to any one of claims 1-9, wherein the tapes or sheets of composite material as used in step (a) and the tapes or sheets of composite material as used in step (b) comprise a non-coloured core and two coloured outer layers, wherein the two coloured outer layers have a thickness in the range of from 0.015-0.1 mm, and/or wherein the laser beam emits electromagnetic radiation at a wavelength of between 360 and 480 nanometres.

11. Tank, vessel, or tube for storage, transport or transfer of a cryogenic fluid obtainable with a process according to any one of claims 1-10.

12. Use of the tank, vessel or tube according to claim 11 for storage, transport or transfer of a cryogenic fluid.

## Patentansprüche

1. Verfahren zum Herstellen eines fluiddichten Laminats aus Verbundwerkstoff auf einem Tank, einem Behälter oder einem Rohr für eine Lagerung, einen Transport oder einen Transfer eines kryogenen Fluids, wobei das Verfahren die Schritte umfasst:
(a) Ankleben von Bändern oder Bahnen aus einem Verbundwerkstoff an eine Innenwand des Tanks, des Behälters oder des Rohrs, um eine erste Schicht angrenzender Bänder oder Bahnen auf der Innenwand des Tanks, des Behälters oder des Rohrs auszubilden;
(b) Ankleben an die erste Schicht angrenzender Bänder oder Bahnen, wie in Schritt (a) ausgebildet, von Bändern oder Bahnen aus einem Verbundwerkstoff, um eine zweite Schicht von Bändern oder Bahnen auf der Innenwand des Tanks, des Behälters oder des Rohrs auszubilden, wobei die Bänder oder Bahnen der zweiten Schicht angeordnet sind, um die Kantengrenzfläche zwischen beliebigen zwei angrenzenden Bändern oder Bahnen der ersten Schicht von Bändern oder Bahnen zu überlappen, die in Schritt (a) ausgebildet werden; und
wobei der Verbundwerkstoff eine Matrix aus einem thermoplastischen Werkstoff und einen orientierten thermoplastischen Werkstoff, der in die Matrix des thermoplastischen Werkstoffes eingearbeitet ist, umfasst,
wobei das Ankleben der Bänder oder Bahnen in Schritt (b) unter der Anwendung eines Laserstrahls erfolgt, um die Bänder oder Bahnen, wie in Schritt (b) verwendet, zu erwärmen und an die erste Schicht von Bändern oder Bahnen, wie in Schritt (a) ausgebildet, anzukleben,
wobei sowohl die obere Oberfläche der Bänder oder Bahnen, die die erste Schicht in Schritt (a) ausbilden, als auch die untere Oberfläche der Bahnen, wie in Schritt (b) verwendet, durch den Laserstrahl an oder nahe der Stelle, wo die Bänder oder Bahnen, wie in Schritt (b) verwendet, an die erste Schicht, die in Schritt (a) ausgebildet wird, angeklebt werden, erwärmt werden,
wobei die Breite der Überlappung auf jeder Seite der Kantengrenzfläche zwischen jeweils zwei angrenzenden Bändern oder Bahnen aus Verbundwerkstoff in der ersten Schicht die gleiche Größe ist.

2. Verfahren nach Anspruch 1, wobei die Bänder oder Bahnen aus Verbundwerkstoff, wie in Schritt (a) verwendet, und die Bänder oder Bahnen aus Verbundwerkstoff, wie in Schritt (b) verwendet, die gleiche Breite und Dicke aufweisen.

3. Verfahren nach einem der Ansprüche 1 bis 2, wobei die Überlappung, wie in Schritt (b) ausgebildet, auf jeder Seite der Kantengrenzfläche zwischen jeweils zwei angrenzenden Bändern oder Bahnen aus Verbundwerkstoff in der ersten Schicht, wie in Schritt (a) ausgebildet, eine Breite von mindestens viermal der Dicke des Bandes oder der Bahn, wie in Schritt (a) verwendet, aufweist.

4. Verfahren nach einem der Ansprüche 1 bis 3, wobei die Kantengrenzfläche zwischen jeweils zwei angrenzenden Bändern oder Bahnen aus Verbundwerkstoff die gleiche Breite aufweist.

5. Verfahren nach einem der Ansprüche 1 bis 4, wobei die Schritte (a) und (b) nach Schritt (b) in derselben Reihenfolge wiederholt werden, um ein anderes flüssigkeitsdichtes Laminat auf der Innenwand des Tanks, des Behälters oder des Rohrs auszubilden.

6. Verfahren nach einem der Ansprüche 1 bis 5, wobei die Bänder oder Bahnen aus Verbundwerkstoff, wie in Schritt (a) verwendet, und die Bänder oder Bahnen aus Verbundwerkstoff, wie in Schritt (b) verwendet, eine Breite in dem Bereich von 5-100 mm und eine Dicke in dem Bereich von 0,1-2 mm aufweisen.

7. Verfahren nach einem der Ansprüche 1 bis 6, wobei der Verbundwerkstoff, aus dem die Bänder oder Bahnen, wie in den Schritten (a) und (b) verwendet, gefertigt werden, eine gewebte Struktur aufweisen.

8. Verfahren nach einem der Ansprüche 1 bis 7, wobei der thermoplastische Werkstoff ein Polyolefin, das aus der Gruppe ausgewählt ist, bestehend aus Polyethylen, Polypropylen, Polybutylen, Polymethylpenten, Polyisobuten oder einem Copolymer oder Terpolymer davon und Polyester umfasst.

9. Verfahren nach einem der Ansprüche 1 bis 8, wobei die Matrix aus einem thermoplastischen Werkstoff und der orientierte thermoplastische Werkstoff, der in die Matrix des thermop1 astischen Werkstoffes eingearbeitet ist, aus dem gleichen thermoplastischen Werkstoff gefertigt sind.

10. Verfahren nach einem der Ansprüche 1 bis 9, wobei die Bänder oder Bahnen aus Verbundwerkstoff, wie in Schritt (a) verwendet, und die Bänder oder Bahnen aus Verbundwerkstoff, wie in Schritt (b) verwendet, einen nicht farbigen Kern und zwei farbige Außenschichten umfassen, wobei die zwei farbigen Außenschichten eine Dicke in dem Bereich von 0,015-0,1 mm aufweisen, und/oder wobei der Laserstrahl elektromagnetische Strahlung bei einer Wellenlänge von zwischen 360 und 480 Nanometern emittiert.

11. Tank, Behälter oder Rohr für die Lagerung, den Transport oder den Transfer eines kryogenen Fluids, der/das mit einem Verfahren nach einem der Ansprüche 1 bis 10 erhältlich ist.

12. Verwendung des Tanks, des Behälters oder des Rohrs nach Anspruch 11 für die Lagerung, den Transport oder den Transfer eines kryogenen Fluids.

## Revendications

1. Procédé de fabrication d'un stratifié étanche aux fluides en matériau composite sur un réservoir, un récipient ou un tube destiné au stockage, au transport ou au transfert d'un fluide cryogénique, le procédé comprenant les étapes suivantes :
(a) l'adhésion des bandes ou des feuilles d'un matériau composite à une paroi intérieure du réservoir, du récipient ou du tube pour former une première couche de bandes ou de feuilles adjacentes sur la paroi intérieure du réservoir, du récipient ou du tube ;
(b) l'adhésion à la première couche de bandes ou de feuilles adjacentes telles que formées à l'étape (a) des bandes ou des feuilles d'un matériau composite pour former une seconde couche de bandes ou de feuilles sur la paroi intérieure du réservoir, du récipient ou du tube, moyennant quoi les bandes ou les feuilles de la seconde couche sont agencées de manière à chevaucher l'interface de bord entre deux bandes ou feuilles adjacentes quelconques de la première couche de bandes ou de feuilles formées à l'étape (a) ; et
dans lequel le matériau composite comprend une matrice d'un matériau thermoplastique et un matériau thermoplastique orienté qui est incorporé dans la matrice du matériau thermoplastique,
dans lequel l'adhésion des bandes ou des feuilles à l'étape (b) est effectuée sous l'application d'un faisceau laser pour chauffer et faire adhérer les bandes ou les feuilles telles qu'utilisées dans l'étape (b) à la première couche de bandes ou de feuilles telles que formées à l'étape (a),
dans lequel, à la fois la surface supérieure des bandes ou des feuilles qui forment la première couche à l'étape (a) et la surface inférieure des feuilles telles qu'utilisées à l'étape (b) sont chauffées par le faisceau laser au niveau ou près de l'emplacement où les bandes ou les feuilles comme utilisées à l'étape (b) sont collées à la première couche formée à l'étape (a),
dans lequel la largeur du chevauchement de chaque côté de l'interface de bord entre chaque paire de bandes ou de feuilles adjacentes de matériau composite dans la première couche est de la même taille.

2. Procédé selon la revendication 1, dans lequel les bandes ou les feuilles de matériau composite comme utilisées à l'étape (a) et les bandes ou les feuilles de matériau composite comme utilisées à l'étape (b) ont la même largeur et épaisseur.

3. Procédé selon l'une quelconque des revendications 1 à 2, dans lequel le chevauchement tel que formé à l'étape (b) de chaque côté de l'interface de bord entre deux bandes ou feuilles adjacentes de matériau composite dans la première couche telle que formée à l'étape (a) a une largeur d'au moins quatre fois l'épaisseur de la bande ou de la feuille telle qu'utilisée à l'étape (a).

4. Procédé selon l'une quelconque des revendications 1 à 3, dans lequel l'interface de bord entre chaque paire de bandes ou de feuilles adjacentes de matériau composite a la même largeur.

5. Procédé selon l'une quelconque des revendications 1 à 4, dans lequel les étapes (a) et (b) sont répétées après l'étape (b) dans la même séquence pour former un autre stratifié étanche aux liquides sur la paroi intérieure du réservoir, du récipient ou du tube.

6. Procédé selon l'une quelconque des revendications 1 à 5, dans lequel les bandes ou feuilles de matériau composite comme utilisées à l'étape (a) et les bandes ou feuilles de matériau composite comme utilisées dans l'étape (b) ont une largeur dans la plage de 5 à 100 mm et une épaisseur dans la plage de 0,1 à 2 mm.

7. Procédé selon l'une quelconque des revendications 1 à 6, dans lequel le matériau composite dont les bandes ou les feuilles sont constituées comme utilisées dans les étapes (a) et (b) a une structure tissée.

8. Procédé selon l'une quelconque des revendications 1 à 7, dans lequel le matériau thermoplastique comprend une polyoléfine choisie parmi le groupe constitué de polyéthylène, de polypropylène, de polybutylène, de polyméthylpentène, de polyisobutène ou d'un copolymère ou d'un terpolymère de celui-ci, et de polyester.

9. Procédé selon l'une quelconque des revendications 1 à 8, dans lequel la matrice d'un matériau thermoplastique et le matériau thermoplastique orienté qui est incorporé dans la matrice du matériau thermoplastique sont constitués du même matériau thermoplastique.

10. Procédé selon l'une quelconque des revendications 1 à 9, dans lequel les bandes ou feuilles de matériau composite telles qu'utilisées dans l'étape (a) et les bandes ou feuilles de matériau composite telles qu'utilisées dans l'étape (b) comprennent une âme non colorée et deux couches externes colorées, dans lequel les deux couches externes colorées ont une épaisseur dans la plage allant de 0,015 à 0,1 mm, et/ou dans lequel le faisceau laser émet un rayonnement électromagnétique à une longueur d'onde comprise entre 360 et 480 nanomètres.

11. Réservoir, récipient, ou tube pour le stockage, le transport ou le transfert d'un fluide cryogénique pouvant être obtenu avec un procédé selon l'une quelconque des revendications 1 à 10.

12. Utilisation du réservoir, récipient ou tube selon la revendication 11 pour le stockage, le transport ou le transfert d'un fluide cryogénique.
